(19) **Europäisches Patentamt / European Patent Office / Office européen des brevets**

(11) **EP 4 202 470 A1**

(12) **DEMANDE DE BREVET EUROPEEN**

(43) Date de publication:
**28.06.2023 Bulletin 2023/26**

(21) Numéro de dépôt: **22212858.9**

(22) Date de dépôt: **12.12.2022**

(51) Classification Internationale des Brevets (IPC):
**G01S 5/02** (2010.01) **G01C 9/00** (2006.01)
**G01S 5/18** (2006.01) **G01S 11/02** (2010.01)
**G01C 21/00** (2006.01)

(52) Classification Coopérative des Brevets (CPC):
**G01S 5/0284; G01C 21/005; G01S 5/02523; G01S 5/186; G01S 11/02**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **21.12.2021 FR 2114096**

(71) Demandeur: **Orange**
**92130 Issy-les-Moulineaux (FR)**

(72) Inventeur: **EXCOFFIER, David**
**92326 CHATILLON (FR)**

(74) Mandataire: **Vidon Brevets & Stratégie**
**16B, rue de Jouanet**
**BP 90333**
**35703 Rennes Cedex 7 (FR)**

(54) **PROCÉDÉ DE POSITIONNEMENT D'OBJETS MIS EN OEUVRE DANS UN OBJET OU DANS UN SERVEUR**

(57) Procédé de positionnement d'objets mis en œuvre dans un objet ou dans un serveur.

L'invention concerne un procédé de positionnement d'objets, mis en œuvre dans un premier objet en communication avec au moins un deuxième objet, comprenant :

- la détermination (21) d'une position dudit premier objet, mettant en oeuvre :

o la détermination (211) de la localisation dudit premier objet par rapport au nord magnétique,

o la détermination (212) de la hauteur dudit premier objet par rapport à au moins un point de référence,

- l'obtention (22) de la position relative dudit au moins un deuxième objet par rapport audit premier objet.

[Fig 2]

Fig. 2

EP 4 202 470 A1

**Description**

1. Domaine de l'invention

Le domaine de l'invention est celui des objets connectés.

Plus précisément, l'invention concerne le positionnement relatif d'objets entre eux, i.e. le positionnement d'objets les uns par rapport aux autres. De cette façon, un objet peut connaître ses voisins géographiques, et communiquer simplement avec eux. De tels objets peuvent être fixes ou mobiles selon l'invention, ou certains fixes et d'autres mobiles.

2. Art antérieur

Il existe de nombreuses techniques de géolocalisation d'objets.

La plupart de ces techniques reposent sur un système de positionnement par satellite, par exemple de type GPS, GLONASS ou Galileo. Un tel système de positionnement par satellite permet de localiser un objet avec une précision de l'ordre de quelques mètres.

Toutefois, un tel système de positionnement par satellite peut s'avérer insuffisant pour géolocaliser précisément un objet, avec une précision de l'ordre de quelques centimètres. Un tel système de positionnement par satellite peut également s'avérer inutilisable dans un environnement contraint, par exemple dans un supermarché, un entrepôt, un sous-sol, etc, notamment lorsque les objets sont placés dans un bâtiment présentant des murs très épais ou sur des étagères métalliques.

D'autres techniques de géolocalisation d'objets ont été proposées, basées sur l'utilisation de balises ou ancres dont les coordonnées géographiques sont connues. Par exemple, la position d'un objet peut être déterminée en se basant sur les points d'accès Wi-Fi auquel l'objet se connecte. Si l'objet est équipé d'une étiquette RFID, sa position peut également être déterminée à partir de lecteurs RFID positionnés à des emplacements de référence.

L'utilisation de points fixes connus (ou « ancres ») nécessite généralement un travail d'installation préalable de ces différents points fixes, avant de pouvoir utiliser un système de localisation à l'intérieur (« indoor »). De plus, selon la configuration des lieux (murs épais, étages, ...), le nombre de point fixes connus et « visibles » des objets à localiser peut varier fortement pour avoir une localisation précise. Enfin, ces installations nécessitent un fonctionnement sans faille et donc une capacité d'installation, configuration et maintien en condition opérationnelle non négligeable.

A nouveau, de telles techniques n'offrent pas une précision suffisante pour géolocaliser précisément un objet. De plus, elles nécessitent le déploiement de balises ou ancres pour localiser les objets.

Il existe donc un besoin pour une nouvelle technique de géolocalisation d'objets qui présente une précision de l'ordre de quelques centimètres, même dans un environnement contraint (par exemple soumis à des interférences), et qui ne repose pas sur l'utilisation de balises ou ancres.

3. Exposé de l'invention

L'invention propose une solution pour la géolocalisation d'objets qui ne présente pas l'ensemble des inconvénients de l'art antérieur, sous la forme d'un procédé de positionnement d'objets, mis en œuvre dans un premier objet, en communication avec au moins un deuxième objet.

Un tel procédé met en œuvre :

- la détermination d'une position dudit premier objet, mettant en œuvre :

   ◦ la détermination de la localisation dudit premier objet par rapport au nord magnétique,
   ◦ la détermination de la hauteur dudit premier objet par rapport à au moins un point de référence,
   ◦ éventuellement la détermination de l'orientation spatiale dudit premier objet par rapport à un repère de référence,

- l'obtention de la position relative dudit au moins un deuxième objet par rapport audit premier objet.

De cette façon, le premier objet peut déterminer précisément sa position :

- sa localisation par rapport au nord magnétique, i.e. si le nord se trouve devant l'objet, derrière l'objet, sur un de ses côtés, à un certain angle, etc.). Par exemple, la détermination de la localisation dudit premier objet par rapport au nord magnétique met en œuvre au moins un capteur de type magnétomètre, tel une boussole,
- sa hauteur par rapport à au moins un point de référence (définissant par exemple un plan de référence), par exemple par rapport au sol, à une étagère, etc. Par exemple, la détermination de la hauteur dudit premier objet par rapport à au moins un point de référence met en œuvre au moins un capteur appartenant au groupe comprenant :

- un capteur de mesure de distance,
- un capteur de mesure de pression atmosphérique, par exemple un capteur barométrique. Éventuellement, le premier objet peut également déterminer son orientation dans l'espace i.e. son tangage (mouvement de rotation de l'objet autour de son axe transversal), son roulis (mouvement de rotation de l'objet autour de son axe longitudinal), et/ou son lacet (mouvement de rotation horizontal de l'objet autour de son axe vertical). Par exemple, la détermination de l'orientation spatiale dudit premier objet met en œuvre au moins un capteur appartenant au groupe comprenant :
  - un accéléromètre,
  - un gyroscope,
  - un inclinomètre.

Une fois la position du premier objet déterminée, il est possible de déterminer la position relative d'au moins un deuxième objet par rapport au premier objet. Cette position relative peut être calculée par le premier objet, ou déterminée par un serveur distant et transmise au premier objet.

En particulier, la solution proposée ne nécessite pas la présence de points fixes (ou balises, ancres), aux coordonnées géographiques préalablement connues.

La solution proposée peut aider ainsi à une géolocalisation précise des objets les uns par rapport aux autres, sans qu'aucune configuration manuelle de chaque objet ne soit nécessaire. En particulier, lorsque les objets peuvent communiquer au moins deux à deux, il est possible de transmettre des informations de configuration ou de mise à jour au premier objet, et de les faire passer aux différents objets par exemple de proche en proche, ce qui permet une automatisation de la configuration / mise à jour des objets, et par suite un gain de temps.

Par exemple, si les objets sont de type étiquettes de prix ou de suivi, la solution proposée peut aider à un gain de temps lors de la création ou reconfiguration des rayons d'un magasin ou d'un entrepôt. Selon un mode de réalisation particulier, l'obtention de la position relative dudit au moins un deuxième objet par rapport audit premier objet comprend l'obtention d'une distance entre ledit premier objet et ledit au moins un deuxième objet.

Par exemple, l'obtention d'une distance entre ledit premier objet et ledit au moins un deuxième objet met en œuvre au moins un capteur fixé sur ledit premier objet et appartenant au groupe comprenant :

- un capteur infrarouge,
- un capteur de temps de vol (ToF ou « time of flight » en anglais).

Selon un mode de réalisation particulier, l'obtention de la position relative dudit au moins un deuxième objet par rapport audit premier objet comprend la détection d'un signal radio émis par ledit au moins un deuxième objet.

Par exemple, un signal selon une norme radio de type WiFi, Bluetooth®, Bluetooth® basse consommation (BLE), RFID, UWB, ou autre peut être émis par le deuxième objet. A détection de ce signal, et notamment de sa puissance, le premier objet peut estimer la position du deuxième objet par rapport au premier objet. Notamment, une solution de type trilatération ou triangulation peut être mise en œuvre sur la base de tels signaux radio.

Selon un mode de réalisation particulier, la position du premier objet une fois déterminée, ou plus généralement au moins une première information utile au positionnement desdits objets, peut être transmise à un autre objet ou à un serveur distant qui centralise les positions des différents objets. De cette façon, chaque objet, ou le serveur distant, peut connaître la position des autres objets, ou à tout le moins de ses voisins géographiques.

Selon un mode de réalisation particulier, le premier objet peut recevoir au moins une deuxième information utile au positionnement desdits objets, en provenance dudit au moins un deuxième objet ou du serveur distant.

Cette information permet notamment d'estimer la position relative du deuxième objet par rapport au premier objet.

Selon un mode de réalisation particulier, l'obtention de la position relative d'un desdits au moins un deuxième objet par rapport audit premier objet met en œuvre une estimation de la position dudit deuxième objet par rapport audit premier objet, délivrant au moins deux positions candidates, une réception d'au moins une troisième information utile au positionnement desdits objets, en provenance d'au moins un troisième objet, et relative à une communication dudit troisième objet avec ledit premier objet et/ou ledit deuxième objet, et une sélection d'une desdites positions candidates en tenant compte de ladite au moins une troisième information reçue dudit troisième objet.

Ainsi, s'il reste une incertitude sur la position d'un deuxième objet, il est possible de tenir compte d'informations reçues d'un troisième objet pour affiner la position du deuxième objet.

Par exemple, ladite au moins une première, resp. deuxième, resp. troisième information en provenance dudit premier, resp. deuxième, resp. troisième, objet appartient au groupe comprenant :

- un identifiant dudit premier, resp. deuxième, resp. troisième, objet,
- une localisation dudit premier, resp. deuxième, resp. troisième, objet par rapport au nord magnétique,
- une orientation spatiale dudit premier, resp. deuxième, resp. troisième, objet, par rapport à un repère de référence,
- une distance entre au moins deux desdits objets parmi le premier, le deuxième et le troisième objet,
- une hauteur dudit premier, resp. deuxième, resp. troisième, objet par rapport audit au moins un point de référence.

En particulier, le premier objet peut recevoir plusieurs de ces informations simultanément, ou successivement. Par exemple, le premier objet peut obtenir dans un premier temps un identifiant d'un deuxième objet et une distance entre le deuxième objet et le premier objet, puis dans un deuxième temps la position du deuxième objet (i.e. localisation par rapport au nord magnétique, hauteur par rapport au point ou plan de référence, et éventuellement orientation spatiale par rapport à un repère de référence).

Selon un mode de réalisation, le procédé de positionnement selon l'invention met en œuvre le stockage d'au moins un élément appartenant au groupe comprenant :

- la position dudit premier objet,
- la position relative dudit au moins un deuxième objet par rapport audit premier objet,
- au moins une information parmi lesdites informations utiles au positionnement desdits objets.

En particulier, le procédé selon l'invention comprend l'obtention, par le premier objet, d'informations de configuration ou de mise à jour du premier objet, et la transmission à un ensemble d'objets, de proche en proche, desdites informations de configuration ou de mise à jour.

De cette façon, le premier objet peut, par exemple, construire au fur et à mesure une carte de positionnement des objets en communication les uns avec les autres. On note que le premier objet peut être en communication uniquement avec un ou plusieurs deuxièmes objets, eux-mêmes en communication avec un ou plusieurs troisièmes objets, etc. Chaque objet peut ainsi communiquer avec ses voisins directs, et faire passer l'information de proche en proche, sans nécessiter une communication avec l'ensemble des objets (architecture « paire à paire » ou P2P plutôt que « distribuée »).

Le premier objet peut ainsi disposer d'une liste des objets présents dans son voisinage avec leur positionnement dans l'espace et les uns par rapport aux autres.

Selon un mode de réalisation particulier, au moins une des étapes précédentes (détermination de la position dudit premier objet, obtention de la position relative dudit au moins un deuxième objet par rapport audit premier objet, transmission ou réception d'informations utiles au positionnement des objets, etc) est mise en œuvre de manière périodique ou de manière événementielle, comme par exemple en cas de détection d'un changement de position dudit premier objet.

De cette façon, on peut disposer d'informations en temps réel sur la position des objets et le positionnement de l'ensemble des objets.

En particulier, dans certains modes de réalisation, le procédé comprend le déclenchement d'une alarme en cas de détection d'un changement de position dudit premier objet ou au moins un deuxième objet.

Par exemple, si les objets sont des œuvres d'art, des voitures, etc, il est possible de localiser les objets les uns par rapport aux autres et de déclencher une alarme en cas de mouvements inappropriés d'un objet (qui pourrait correspondre à un vol de cet objet).

Dans un mode de réalisation particulier, l'obtention de la position relative dudit au moins un deuxième objet par rapport audit premier objet tient compte d'au moins une contrainte physique liée à l'endroit où sont positionnés lesdits objets.

Une telle contrainte physique peut être liée à la pièce dans laquelle se situent les objets (position des murs, du sol, du plafond, etc) ou à une structure supportant les objets (étagère, etc).

Par exemple, si plusieurs positions candidates sont possibles pour un deuxième objet, on peut tenir compte de l'environnement (mur, sol, plafond, étagère, etc) pour décider la position du deuxième objet. Ainsi, si l'on se place dans le contexte d'un supermarché, et que l'on considère deux objets voisins sensiblement à la même hauteur par rapport au sol, on peut supposer qu'ils sont sur une même étagère et donc alignés.

Dans un autre mode de réalisation, l'invention concerne un procédé de positionnement d'objets, mis en œuvre dans un serveur distant en communication avec un premier objet et au moins un deuxième objet, comprenant :

- l'obtention d'une position dudit premier objet,
- l'obtention d'une position dudit au moins un deuxième objet,
- la détermination de la position relative dudit au moins un deuxième objet par rapport audit premier objet,

la position dudit premier, respectivement deuxième, objet comprenant :

- la localisation dudit premier, respectivement deuxième, objet par rapport au nord magnétique,
- la hauteur dudit premier, respectivement deuxième, objet par rapport à au moins un point de référence, et
- éventuellement l'orientation spatiale dudit premier, respectivement deuxième, objet, par rapport à un repère de référence.

Ainsi, il est possible d'utiliser un serveur centralisé pour collecter les positions des différents objets, et déterminer les positions relatives des objets. Les caractéristiques et avantages du procédé de positionnement, mis en œuvre par le serveur, sont les mêmes que ceux du procédé de positionnement mis en œuvre par le premier objet, et ne sont pas décrits plus en détails ici.

Notamment, un tel serveur peut construire une carte de positionnement des objets, et disposer ainsi d'une vue globale avec le positionnement des objets les uns par rapport aux autres et les liens de communication entre les différents objets.

Dans un mode de réalisation particulier, le serveur peut transmettre la position relative déterminée au premier et/ou au deuxième objet. De cette façon, la construction de la carte de positionnement peut être mise en œuvre par au moins un desdits objets.

En particulier, un tel serveur distant stocke au moins un élément appartenant au groupe comprenant :

- la position dudit premier objet,
- la position dudit au moins un deuxième objet,
- la position relative dudit au moins un deuxième objet par rapport audit premier objet,
- au moins une information utile au positionnement desdits objets, telle que définie précédemment. L'invention concerne par ailleurs un objet correspondant. Un tel objet, dit premier objet, est en communication avec au moins un deuxième objet, et comprend :
- des moyens de détermination de sa position, comprenant :

  ∘ des moyens de détermination de la localisation dudit premier objet par rapport au nord magnétique,
  ∘ des moyens de détermination de la hauteur dudit premier objet par rapport à au moins un point de référence,

- des moyens d'obtention de la position relative dudit au moins un deuxième objet par rapport audit premier objet.

Dans un autre mode de réalisation, l'invention concerne une structure physique supportant au moins un objet selon l'invention.

L'invention concerne encore un serveur correspondant. Un tel serveur est en communication avec un premier objet et au moins un deuxième objet, et comprend :

- des moyens d'obtention d'une position dudit premier objet,
- des moyens d'obtention d'une position dudit au moins un deuxième objet,
- des moyens de détermination de la position relative dudit au moins un deuxième objet par rapport audit premier objet,

la position dudit premier, respectivement deuxième, objet comprenant :

- la localisation dudit premier, respectivement deuxième, objet par rapport au nord magnétique,
- la hauteur dudit premier, respectivement deuxième, objet par rapport à au moins un point de référence.

Par exemple, le serveur est de type passerelle (en anglais « gateway »).

Un tel objet, respectivement serveur, est notamment adapté à mettre en œuvre les étapes du procédé de positionnement décrit précédemment dans l'un quelconque de ses modes de réalisation. Un tel objet, respectivement serveur, pourra bien sûr comporter les différentes caractéristiques relatives au procédé de positionnement selon l'invention, qui peuvent être combinées ou prises isolément. Ainsi, les caractéristiques et avantages de cet objet, respectivement serveur, sont les mêmes que ceux du procédé de positionnement. Par conséquent, ils ne sont pas détaillés plus amplement.

Un mode de réalisation de l'invention vise aussi à protéger un ou plusieurs programmes d'ordinateur comportant des instructions adaptées à la mise en œuvre du procédé de positionnement selon au moins un mode de réalisation de l'invention tel que décrit ci-dessus, lorsque ce ou ces programmes sont exécutés par un processeur, ainsi qu'au moins un support d'informations lisible par un ordinateur comportant des instructions d'au moins un programme d'ordinateur tel que mentionné ci-dessus.

## 4. Liste des figures

D'autres caractéristiques et avantages de l'invention apparaîtront plus clairement à la lecture de la description suivante d'un mode de réalisation particulier, donné à titre de simple exemple illustratif et non limitatif, et des dessins annexés, parmi lesquels :

- la figure 1 illustre un exemple de système comprenant une pluralité d'objets dans lequel peut être mise en œuvre l'invention ;
- la figure 2 présente les principales étapes d'un procédé de positionnement selon un mode de réalisation de l'invention, mises en œuvre par un premier objet ;
- la figure 3 présente les principales étapes d'un procédé de positionnement selon un mode de réalisation de l'invention, mises en œuvre par un serveur ;
- la figure 4A, la figure 4B et la figure 4C illustrent différentes positions d'une étiquette par rapport à son support ;
- la figure 5A, la figure 5B et la figure 5C illustrent la détermination de la hauteur d'un objet à la verticale par rapport au sol selon un mode de réalisation particulier ;
- la figure 6A et la figure 6B illustrent des exemples de rayonnages vue de face et vue de dessus, et la zone de couverture d'un objet B2 ;
- la figure 7 illustre différentes positions candidates pour un objet ;
- la figure 8 reprend l'exemple de rayonnage vue de face de la figure 6A, et illustre la zone de couverture d'un objet B3 ;
- la figure 9A et la figure 9B présentent la construction d'une carte de positionnement des différents objets entre eux selon un mode de réalisation de l'invention ;
- la figure 10 schématise un algorithme de découverte des voisins d'un premier objet ;
- la figure 11 et la figure 12 illustrent respectivement la structure simplifiée d'un objet et d'un serveur selon différents modes de réalisation de l'invention.

## 5. Description de modes de réalisation de l'invention

### 5.1 Principe général

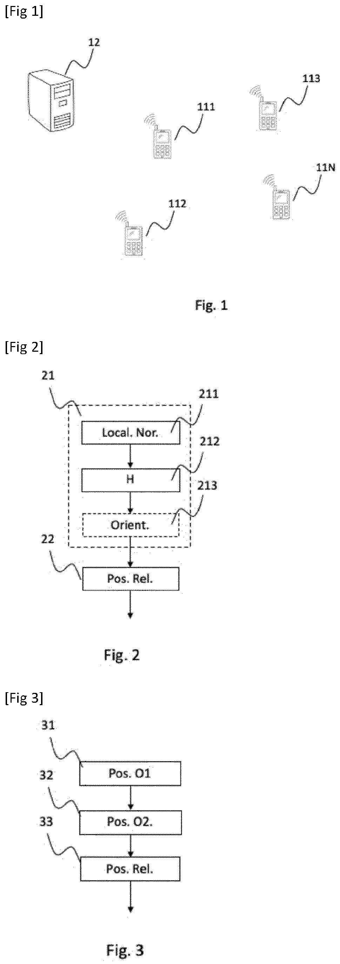

On se place dans le contexte du système illustré en figure 1, comprenant une pluralité d'objets connectés 111, 112, ..., 11N, par exemple des terminaux mobiles, et éventuellement un serveur distant 12. Les objets 11i, pour i allant de 1 à N, peuvent communiquer au moins deux à deux. Si un serveur distant 12 est présent, au moins certains des objets peuvent communiquer avec le serveur 12.

La figure 2 illustre le principe général de l'invention, mis en œuvre dans un premier objet 111 pour localiser les objets voisins. Chaque objet peut tour-à-tour être considéré comme un premier objet, pour localiser ses propres voisins, et construire de proche en proche une carte de positionnement des objets.

Au cours d'une première étape 21, le premier objet 111 peut déterminer sa position géographique.

Plus précisément, le premier objet 111 peut déterminer sa localisation 211 par rapport au nord magnétique, sa hauteur 212 par rapport à au moins un point de référence, par exemple par rapport au plan de référence correspondant au sol, et éventuellement son orientation spatiale 213 par rapport à un repère de référence.

Au moins certains des autres objets 112, 113, ... 11N (par exemple chacun de ces autres objets) peuvent par exemple faire de même (ou avoir fait de même au préalable dans certains modes de réalisation ). Au cours d'une deuxième étape 22, le premier objet peut obtenir la position relative d'au moins un deuxième objet 112, 113, par rapport au premier objet 111.

Par exemple, cette position relative peut être estimée par le premier objet 111. Le premier et le deuxième objet peuvent ainsi communiquer entre eux directement, puisqu'ils sont à portée de signal l'un l'autre. Le deuxième objet est également appelé « voisin direct » du premier objet.

En variante, la position relative peut être déterminée par le serveur distant 12 et transmise au premier objet 111.

Ainsi, selon un mode de réalisation particulier, le système peut comprendre un serveur distant 12. La figure 3 illustre les principales étapes mises en œuvre par un tel serveur.

Au cours d'une première étape 31, le serveur peut obtenir la position du premier objet 111 (i.e. sa localisation par rapport au nord magnétique, sa hauteur par rapport à au moins un point de référence, et éventuellement son orientation spatiale par rapport à un repère de référence), en provenance du premier objet s'il est en communication avec le serveur.

Au cours d'une deuxième étape 32, le serveur peut obtenir la position d'au moins un deuxième objet 112, 113 (i.e. sa localisation par rapport au nord magnétique, sa hauteur par rapport à au moins un point de référence et éventuellement son orientation spatiale par rapport à un repère de référence), en provenance du deuxième objet s'il est en communication avec le serveur.

Au cours d'une troisième étape 33, le serveur peut déterminer la position relative du deuxième objet 112 par rapport au premier objet 111.

On décrit ci-après plus en détails les différentes étapes de l'invention.

Afin de varier les exemples, on considère désormais que les objets connectés sont des étiquettes (de prix, suivi de colis, etc).

### 5.2 Position d'un objet

Comme indiqué ci-dessus, au cours d'une première étape 21, le premier objet peut déterminer sa position géographique. Par exemple, le premier objet est équipé d'un ou plusieurs capteurs, permettant de déterminer sa position, notamment sa localisation 211 par rapport au nord magnétique, sa hauteur 212 par rapport à au moins un point de référence, et/ou éventuellement son orientation 213 dans l'espace (tangage, roulis, et/ou lacet par exemple).

### 5.2.1 Localisation par rapport au nord magnétique

La localisation 211 d'un objet selon l'invention par rapport au nord magnétique est par exemple déterminée en utilisant un capteur de type magnétomètre, mesurant le magnétisme, i.e. la direction, la force et le changement relatif d'un champ magnétique à un endroit donné. Par exemple, une boussole peut être utilisée pour mesurer la direction du champ magnétique terrestre.

L'utilisation d'un capteur de type magnétomètre selon un mode de réalisation de l'invention permet notamment de déterminer la localisation de l'objet par rapport au nord magnétique, i.e. si l'étiquette est face au nord magnétique, dos au nord magnétique, à un certain angle par rapport au nord magnétique.

Selon un mode de réalisation particulier, il est ainsi possible de déterminer si une étiquette est placée sur une étagère dans un rayon de supermarché par exemple ou sur une tête de gondole, les têtes de gondole étant généralement positionnées à angle droit par rapport aux rayons. Par exemple, le magnétomètre équipant les différentes étiquettes permet de détecter que le nord magnétique se situe derrière les étiquettes positionnées en tête de gondole, et sur la gauche des étiquettes positionnées sur une étagère d'un rayon.

Si les étiquettes sont équipées de magnétomètre, il est ainsi possible de connaitre leur positionnement les unes des autres par rapport au champ magnétique, et cela pour chaque étiquette.

En variante, d'autres techniques peuvent être mises en œuvre pour localiser un objet par rapport au nord magnétique.

### 5.2.2 Orientation dans l'espace

Il est également possible de déterminer l'orientation 213 de l'objet dans l'espace, par rapport à un repère de référence. Par exemple, un tel repère de référence peut être un repère orthogonal centré sur un point de référence (centre de la Terre, centre de l'objet, etc.), formé de trois axes, respectivement vertical, horizontal et transversal.

Dans un mode de réalisation particulier, le repère de référence est centré sur l'objet, et correspond à une position nominale de l'objet (par exemple une étiquette correctement positionnée sur son support). On peut ainsi définir l'orientation d'un objet dans l'espace en tenant compte de sa rotation par rapport à ses trois axes, où O est le centre de l'objet :

- le roulis (en anglais « roll »), qui est un mouvement de rotation d'un objet autour de son axe longitudinal O-X (axe de roulis),
- le tangage (en anglais « pitch »), qui est un mouvement de rotation d'un objet autour de son axe transversal O-Y, et
- le lacet (en anglais « yaw »), qui est le mouvement de rotation horizontal d'un objet autour de son axe vertical O-Z.

Différentes solutions sont proposées pour déterminer l'orientation de l'objet dans l'espace.

Selon un premier exemple, on considère que l'objet est équipé d'un capteur de type accéléromètre trois axes.

On rappelle qu'un accéléromètre est un dispositif électromécanique utilisé pour mesurer les forces d'accélération. Ces forces peuvent être dynamiques (comme les forces de mouvement ou de vibration) ou statiques (comme la force de gravité).

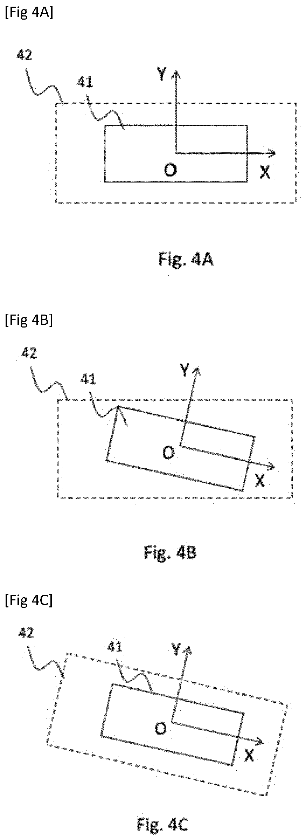

L'utilisation d'un accéléromètre selon ce premier exemple permet d'une part de mesurer les forces dynamiques, et détecter ainsi un changement de position de l'étiquette (par exemple parce qu'elle est tombée ou a été déplacée). Un tel changement peut notamment être notifié à un ou plusieurs utilisateurs, à au moins un deuxième objet, voisin direct du premier objet, et/ou au serveur distant. Par exemple, les figures 4A et 4B illustre une même étiquette 41 à deux instants différents t1 et t2. Au premier instant t1, illustré en figure 4A, on considère que l'étiquette 41 est correctement positionnée sur un système d'accroche 42 à une étagère, également appelé support 42.

Au deuxième instant t2, illustré en figure 4B, on considère que l'étiquette s'est partiellement décrochée, selon un mouvement en lacet autour de son axe O-Z (perpendiculaire à la surface de l'étiquette). L'accéléromètre permet de détecter un décrochage partiel de l'étiquette 41 de son système d'accroche 42 à l'étagère.

L'utilisation d'un accéléromètre permet donc de mesurer l'accélération d'un objet en mouvement, (puisqu'il permet de mesurer une accélération non gravitationnelle linéaire) comme une étiquette de prix qui tombe ou que l'on déplace.

L'utilisation d'un accéléromètre permet d'autre part de mesurer l'inclinaison d'un objet immobile (puisqu'il permet de mesurer directement le champ gravitationnel). Ainsi, en revenant à la figure 4A, l'accéléromètre permet de mesurer l'orientation dans l'espace de l'étiquette 41 immobile, bien positionnée sur son support. En effet, l'accéléromètre ne fait pas la différence entre l'accélération et la gravité. Lorsqu'il est immobile, l'accéléromètre peut mesurer le champ gravitationnel. Un accéléromètre trois axes peut ainsi mesurer la composante de la force de gravité selon trois axes :

- l'axe des X (orienté selon le sens de la longueur)
- l'axe des Y (orienté selon le sens de la largeur) et
- l'axe des Z (orienté perpendiculairement à la surface).

L'utilisation d'un capteur dit « accéléromètre 3 axes » permet de positionner un accéléromètre dans chacun des plans X, Y et Z, et de déterminer ainsi l'orientation de l'objet dans l'espace.

Comme indiqué ci-dessus, il existe d'autres solutions pour déterminer l'orientation de l'objet dans l'espace.

Ainsi, selon un deuxième exemple, on considère que l'objet est équipé de deux capteurs, dont un capteur de type accéléromètre et un capteur de type gyroscope.

L'utilisation d'un gyroscope et d'un accéléromètre selon ce deuxième exemple permet de savoir dans quelle orientation spatiale par rapport à un repère de référence se trouve l'objet.

En reprenant les figures 4A et 4B présentées ci-dessus, on considère qu'en figure 4A, l'étiquette 41 et le système d'accroche 42 à l'étagère sont bien positionnés, alors qu'en figure 4B, l'étiquette 41 n'est pas positionnée de façon nominale sur le système d'accroche 42 à l'étagère.

Selon la figure 4C, l'étiquette 41 est positionnée de façon nominale sur le système d'accroche 42 à l'étagère, mais c'est le système d'accroche dans son ensemble qui a pu se décrocher et n'est pas positionné nominalement. Dans ce cas, plusieurs étiquettes peuvent avoir le même angle de positionnement, et il est possible de détecter que le système d'accroche est mal orienté. Un tel problème peut être notifié à un ou plusieurs utilisateurs, à au moins un deuxième objet, et/ou au serveur distant.

D'autres solutions peuvent encore être envisagées pour déterminer l'orientation de l'objet dans l'espace, reposant par exemple sur l'utilisation d'un inclinomètre trois axes ou toute autre solution technique.

*5.2.3 Hauteur par rapport à au moins un point de référence*

En plus de déterminer la localisation de l'objet par rapport au nord magnétique, et éventuellement l'orientation spatiale de l'objet, il est aussi important de savoir déterminer la « position verticale » d'un objet, i.e. la hauteur à laquelle se trouve l'objet par rapport à un point ou un plan de référence, par exemple par rapport au sol ou par rapport à un autre objet. Cela permet par exemple de déterminer par exemple si deux étiquettes sont fixées à une même étagère.

Pour ce faire, différentes solutions peuvent être envisagées.

Selon un premier exemple, un capteur mesurant la pression atmosphérique, de type capteur barométrique par exemple, peut être utilisé. On note qu'un tel capteur ne peut fonctionner qu'à pression de l'air ambiante, et ne peut donc pas être utilisé dans des environnements sous pression atmosphérique contrôlée.

Un tel capteur de pression de précision de type capteur barométrique peut notamment être utilisé pour mesurer la hauteur relative entre différents objets. Ainsi, chaque objet peut connaître avec précision la pression atmosphérique qui l'entoure, et un résultat associé en Pascal.

Un simple calcul entre les différentes données des objets entre eux permet de s'approcher à 5 centimètres près de la hauteur qui les sépare les uns des autres. Il est ainsi possible de classer les objets selon leur mesure de pression atmosphérique, la plus basse valeur indiquant les objets les plus proches du sol, et la plus haute les plus éloignés.

Selon un deuxième exemple, l'objet peut être équipé d'un capteur permettant de mesurer une distance entre l'objet (premier objet) et un autre objet (deuxième objet), ou l'objet (premier objet) et le sol. Pour se faire, ce capteur peut être positionné en direction du sol.

On note que de nombreuses solutions techniques sont disponibles pour mesurer une distance : ultrason, laser, capacitif, infrarouge, mesure de temps de vol, etc.

On décrit ci-après les différentes étapes permettant de mesurer une distance selon un exemple de réalisation.

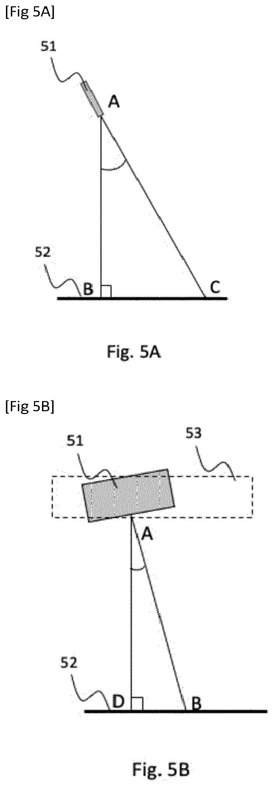

On cherche ici à mesurer la distance entre l'objet portant le capteur et le sol, à la verticale du sol. Comme illustré en figure 5A, il est possible que l'objet ne soit pas positionné parfaitement à la verticale par rapport au sol, mais soit installé de façon légèrement inclinée (rotation par rapport à son axe longitudinal).

Ainsi, la figure 5A illustre une vue en coupe d'une étiquette 51, équipée d'un capteur de mesure de distance positionné sur la tranche inférieure de l'étiquette 51, par exemple au milieu de la tranche inférieure de l'étiquette, correspondant au point A, et dirigé dans la direction de l'axe transversal de l'étiquette (direction AC). Une telle inclinaison de l'étiquette permet par exemple une meilleure visibilité des informations qu'elle porte pour les utilisateurs.

Dans cet exemple, le problème à résoudre est de trouver la valeur de la hauteur du système à la verticale du sol 52 (distance AB), grâce à un angle donné par le gyroscope $(\widehat{BAC})$ et la valeur d'un côté fourni par le capteur de distance (distance AC) : $AB = \cos(\widehat{BAC}) \times AC$.

Par exemple, si on considère un angle $\widehat{BAC} = 24°$ (donné par le gyroscope) et une mesure de distance $AC$ = 150 cm (donnée par le capteur), on peut déterminer $AB$ = cos(24°) $\times$ 150 = 137,03 cm.

On peut ainsi déterminer la hauteur de l'objet par rapport au sol. Ici, l'étiquette 51 est positionnée verticalement à 137,03cm du sol.

Dans le cas où l'objet ne serait pas positionné préalablement à l'horizontal, comme illustré en figure 5B, il est possible de faire un nouveau calcul pour retrouver la valeur la plus proche de la verticale par rapport au sol.

Ainsi, la figure 5B illustre une vue de face de l'étiquette 51, positionnée sur une étagère 53, l'étiquette 51 n'étant pas positionnée à l'horizontal (rotation autour de l'axe perpendiculaire à la surface de l'étiquette).

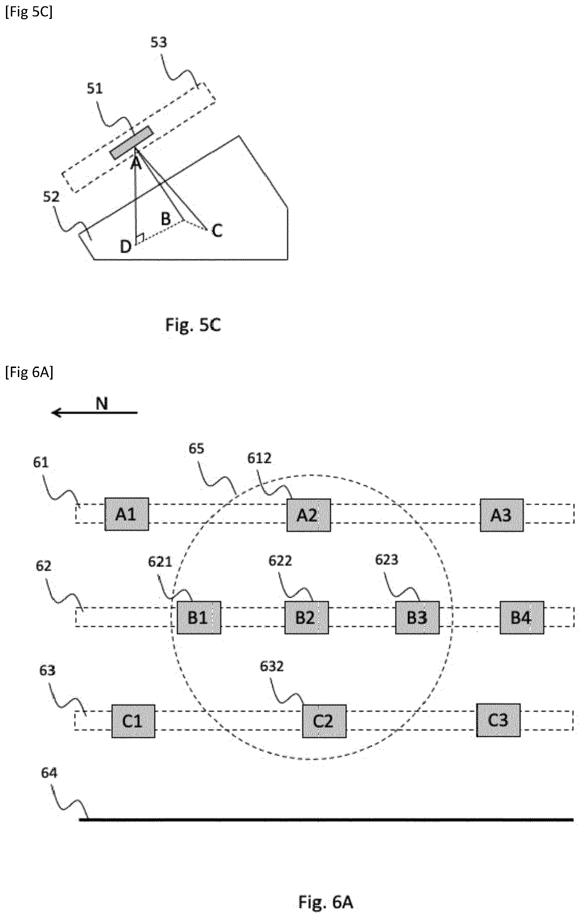

La figure 5C schématise ce décalage par rapport à la verticale dans deux axes (un premier décalage lié à la rotation de l'étiquette autour de son axe longitudinal, correspondant à une inclinaison de l'étiquette, et un deuxième décalage lié à la rotation de l'étiquette autour de l'axe perpendiculaire à la surface de l'étiquette, correspondant au non-positionnement à l'horizontal).

La distance BC à compenser/redresser correspond à l'avancement lié à l'inclinaison de l'étiquette 51. La distance BD à compenser/redresser correspond au biais lié au non-positionnement à l'horizontal de l'étiquette 51.

On cherche ici à trouver la valeur de la hauteur du système à la verticale du sol (AD), grâce à un angle donné par le gyroscope $\widehat{BAD}$ et la valeur d'un côté, telle qu'obtenue par le calcul précédent : $AD = \cos(\widehat{BAD}) \times AB$.

En reprenant l'exemple précédent, si on considère un angle $\widehat{BAD} = 5°$ (donné par le gyroscope) et une mesure de distance AB = 137,03 cm (donnés par le calcul précédent), on peut déterminer AD = cos(5°) $\times$ 137,03 = 136,50 cm.

On peut ainsi déterminer la hauteur de l'objet par rapport au sol. Ici, l'étiquette 51 est positionnée verticalement à 136,50 cm du sol.

On note que l'étape de compensation du biais lié au non-positionnement à l'horizontal de l'étiquette 51 est facultative, notamment si la hauteur des étagères entre elles est supérieure à l'erreur calculée possible. Ainsi, si chaque étagère est séparée de 30cm, la marge d'erreur de 5,3mm dans l'exemple précédent peut éventuellement être considérée comme négligeable.

A l'issue de ces différentes étapes, on connait donc la position d'un objet, i.e. sa localisation par rapport au nord magnétique, son orientation spatiale, et sa hauteur par rapport à au moins un point de référence.

De telles étapes peuvent être mises en œuvre pour chaque objet du système, par exemple pour chaque objet 111, 112, 11N du système illustré en figure 1.

Il est notamment possible de classer les différents objets par hauteur (par exemple pour identifier un groupe d'objets dans lequel tous les objets sont sensiblement à la même hauteur, et donc vraisemblablement situés sur une même étagère/sur un même plan horizontal) et/ou en tenant compte de leur localisation par rapport au nord magnétique (par exemple pour identifier un groupe d'objets dans lequel tous les objets sont localisés de la même façon par rapport au nord magnétique : face au nord, à l'est, à l'ouest, face au sud, ou dans toute autre position par rapport au nord, et donc vraisemblablement situés dans un même rayonnage).

On note que l'étape de détermination de la position d'un objet peut être mise en œuvre une seule fois, notamment si l'objet est immobile, ou plusieurs fois, par exemple de manière périodique ou suite à un événement déclencheur (interne ou externe).

Par exemple, un mouvement ou changement de position d'un objet, qui peut notamment être détecté par l'un des capteurs décrits précédemment, déclenche une nouvelle détermination de la position de l'objet.

L'objet peut par exemple attendre que le mouvement soit terminé pour déterminer sa position.

Un filtre peut éventuellement être appliqué pour éviter le déclenchement d'une nouvelle détermination de la position de l'objet pour les plus faibles mouvements (par exemple des micro-secousses générées lorsque quelqu'un marche à côté de l'objet).

Connaissant la position d'au moins un premier objet, on cherche ensuite à déterminer sa position par rapport à d'autres objets.

Selon un premier mode de réalisation, chaque objet peut transmettre sa position à un serveur distant, par exemple le serveur 12 de la figure 1, qui peut ainsi déterminer les positions des différents objets entre eux.

Selon un deuxième mode de réalisation, un premier objet (et éventuellement tous les objets du système) peut interroger (« scanner ») son environnement pour obtenir des informations sur au moins certains des objets alentours, situés en proximité de sa propre position, ou recevoir spontanément (i.e. sans interrogation de la part du premier objet) ces informations sur des objets alentours. Le premier objet peut ainsi déterminer la position d'au moins un deuxième objet par rapport à sa propre position. Dans la suite de la description, on se place dans le contexte de ce deuxième mode de réalisation, selon lequel le premier objet calcule lui-même sa position relative par rapport à au moins un deuxième objet, voisin direct du premier objet.

*5.3 Position relative des objets*

A cette étape, le but est de déterminer la position relative entre un premier objet et au moins un deuxième objet avec lequel il peut communiquer, par exemple à partir d'une valeur de distance entre le premier objet et au moins un deuxième objet.

*5.3.1 Obtention d'une valeur de distance*

Différentes solutions sont proposées pour obtenir une valeur de distance entre le premier objet et au moins un deuxième objet.

Ainsi, selon au moins un mode de réalisation, un ou plusieurs capteurs supplémentaires peuvent être prévus sur tout ou partie des tranches du premier objet (gauche, droite, haut, bas, et/ou dans les angles, selon la forme de l'objet), permettant de mesurer une distance entre le premier objet et au moins un deuxième objet. Comme déjà indiqué, de nombreuses solutions techniques sont disponibles pour mesurer une distance : ultrason, laser, capacitif, infrarouge, mesure de temps de vol (« ToF »), etc. Ce mode de réalisation permet une mesure précise des distances entre deux objets. Toutefois, cette mesure n'est possible que si le deuxième objet est positionné sensiblement dans l'axe du capteur du premier objet.

Dans au moins un mode de réalisation, il est possible d'utiliser une solution de type trilatération ou triangulation pour géolocaliser les objets, notamment lorsqu'ils sont situés à proximité les uns des autres. En particulier, on considère que les objets peuvent communiquer au moins deux à deux. Les objets disposent donc de moyens de communication sans fil, par exemple de type Bluetooth® (notamment à basse consommation, BLE), UWB, WiFi ou autre. Ces moyens de communication peuvent être utilisés pour détecter les objets à proximité et déterminer les distances entre ces objets. On note qu'une telle solution ne nécessite pas l'utilisation d'équipements supplémentaires fixes dont les coordonnées géographiques sont connues par avance, de type balises ou ancres.

De plus, il est possible de jouer sur la puissance des signaux radios pour qu'un premier objet ne détecte que les deuxièmes objets les plus proches. Par exemple, le premier objet peut rechercher uniquement les objets situés à courte distance de lui en réduisant l'énergie nécessaire à la communication sans fil (par exemple à son strict minimum).

Il est aussi possible d'agrandir ou de réduire la portée du signal radio pour permettre au premier objet de détecter plus ou moins d'objets autour de lui : moins le signal est fort, moins il se propage loin, et ainsi moins d'objets autour du premier objet sont détectés. Selon l'usage et le contexte attendu, il est aussi possible d'utiliser ce système de communication pour filtrer les objets aux alentours du premier objet.

On note par ailleurs que selon le type de technologie utilisée pour les communications sans fil, la portée et la précision sont variables.

Dans un troisième mode de réalisation, il est possible de combiner les deux modes de réalisation présentés ci-dessus, par exemple en utilisant des capteurs pour connaitre la distance entre le premier objet et ses plus proches voisins, et en utilisant des ondes radio pour connaitre de façon plus exhaustive l'ensemble de voisins du premier objet, selon la portée du signal radio.

A l'issue de cette étape, le premier objet dispose donc d'une valeur de distance par rapport à au moins un deuxième objet, à proximité du premier objet.

*5.3.2 Connaissance des objets voisins*

En plus d'une valeur de distance, le premier objet peut obtenir d'autres informations sur les objets du système.

Un tel processus de découverte, également appelé « discovery », peut être utilisé par le premier objet pour demander et/ou recevoir les caractéristiques d'autres objets présents dans le système, par exemple un identifiant, les services supportés ou offerts par un autre objet, etc. Ces informations peuvent être transmises spontanément par un deuxième objet, ou en réponse à une requête émise par le premier objet.

Selon un premier exemple, comme indiqué ci-dessus, le premier objet peut utiliser un protocole de communication sans fil pour communiquer avec les autres objets à portée de signal. On note que le protocole sans fil Bluetooth® ou BLE intègre, selon la norme correspondante, des capacités de découverte automatique d'autres objets Bluetooth.

Selon un deuxième exemple, il est possible d'utiliser des protocoles de communication dits « zero configuration » permettant cette découverte automatique d'objets, comme mDNS, DDSP, WS-Discovery, ou tout autre type de protocole permettant cette découverte automatisée et décentralisée.

*5.3.3 Positionnement des objets voisins*

A l'issue des étapes précédentes, le premier objet peut donc disposer de valeurs de distance par rapport aux objets voisins.

Il peut ainsi construire une liste d'objets, avec les caractéristiques associées à ces objets. Le premier objet peut notamment collecter au moins une information complémentaire utile au positionnement des objets, en provenance d'un deuxième objet (voisin direct du premier objet) ou d'un troisième objet (voisin indirect du premier objet) appartenant au groupe comprenant :

- un identifiant de l'objet
- une localisation de l'objet par rapport au nord magnétique,
- une orientation spatiale de l'objet par rapport à un repère de référence,
- une hauteur de l'objet par rapport à au moins un point de référence, par exemple par rapport au sol,
- etc.

Les valeurs de distance et informations utiles au positionnement des objets peuvent être obtenues en même temps ou de façon différée.

Le premier objet (Objet1) peut ainsi stocker les différentes informations reçues des deuxièmes objets (Objet2), par exemple sous la forme du tableau suivant :

| Identifiant Objet2 #1 | Distance par rapport à Objet1 | Localisation par rapport au nord magnétique | Hauteur par rapport au sol | Autres informations (par exemple : direction de l'objet) |
|---|---|---|---|---|
| Identifiant Objet2 #2 | Distance par rapport à Objet1 | Localisation par rapport au nord magnétique | Hauteur par rapport au sol | Autres informations (par exemple : direction de l'objet) |
| Identifiant Objet2 #3 | Distance par rapport à Objet1 | Localisation par rapport au nord magnétique | Hauteur par rapport au sol | Autres informations (par exemple : direction de l'objet) |
| Identifiant Objet2 #4 | Distance par rapport à Objet1 | Localisation par rapport au nord magnétique | Hauteur par rapport au sol | Autres informations (par exemple : direction de l'objet) |
| ... | ... | ... | ... | ... |
| Identifiant Objet2 #n | Distance par rapport à Objet1 | Localisation par rapport au nord magnétique | Hauteur par rapport au sol | Autres informations (par exemple : direction de l'objet) |

Le premier objet peut également générer une carte de positionnement des deuxièmes objets autour de lui, également appelée graphe, permettant de visualiser simplement les objets à proximité du premier objet, avec lesquels le premier objet peut communiquer directement (voisins directs).

A titre d'exemple, la figure 6A illustre une vue de face d'un rayonnage I, comprenant plusieurs étagères 61, 62, 63, sur lesquelles sont placées des étiquettes de prix (A1, A2, A3 sur l'étagère supérieure 61, B1, B2, B3, B4 sur l'étagère intermédiaire 62 et C1, C2, C3 sur l'étagère inférieure 63), et le sol 64. On considère que l'étiquette B2 622 est un premier objet, dont la position est déterminée comme détaillé ci-dessus, pour lequel on cherche à déterminer la position relative par rapport à ses voisins. La zone de couverture de l'étiquette B2 correspond sensiblement à une sphère, représentée par le disque 65 sur la vue de face de la figure 6A. Cette zone de couverture correspond à la région dans laquelle le premier objet B2 peut émettre ou recevoir des signaux, selon sa puissance d'émission/réception par exemple. Ainsi, le premier objet B2 peut communiquer avec les deuxièmes objets B1 621, A2 612, B3 623, C2 632 situés dans sa zone de couverture, considérés comme « visibles » du premier objet B2. Ces deuxièmes objets B1, A2, B3, C2 sont également appelés « voisins directs » du premier objet B2.

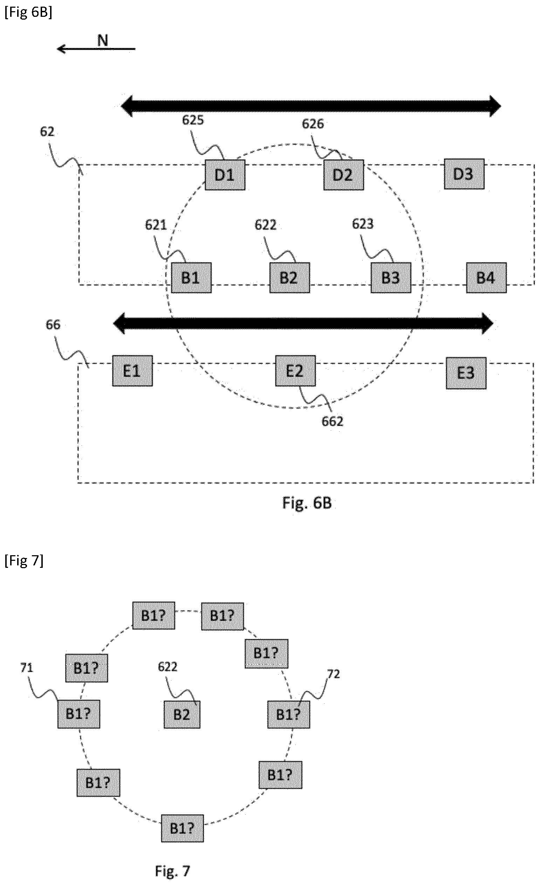

La figure 6B illustre une vue de dessus du rayonnage I, en coupe au-dessus de l'étagère intermédiaire 62. On note que d'autres étagères pourraient être prises en compte dans la réalité, mais ne le sont pas pour simplifier cet exemple purement illustratif. Sur cette vue de dessus, on voit également un autre rayonnage II et l'étagère intermédiaire 66 de ce rayonnage II. La double flèche illustre l'allée entre les deux rayonnages, correspondant à une zone de passage des utilisateurs. Comme indiqué ci-dessus, la zone de couverture de l'étiquette B2 correspond sensiblement à une sphère. Les deuxièmes objets D1 625 et D2 626, situés sur la même étagère 62 que le premier objet B2 622 mais face à une autre allée, de même que le deuxième objet E2 662, situé sur l'étagère 66 du rayonnage II, sont situés dans la zone de couverture du premier objet B2.

Le premier objet B2 peut donc communiquer avec les deuxièmes objets B1, A2, B3, C2, D1, D2 et E2, tous situés dans sa zone de couverture.

On considère que le premier objet B2 connaît sa position, notamment sa hauteur par rapport au sol 64 (par exemple 60 cm) et sa localisation par rapport au nord magnétique (par exemple 90°).

Le premier objet B2 peut notamment recevoir des informations des deuxièmes objets situés dans sa zone de couverture, et stocker ces informations :

| Identifiant Objet2 distant | Distance par rapport à Objet1 (B2) | Localisation par rapport au nord magnétique | Hauteur par rapport au sol | Autres informations (par exemple : direction de l'objet) |
|---|---|---|---|---|
| B1 | 30 cm | 90° | 60 cm | |
| B3 | 30 cm | 90° | 60 cm | |
| A2 | 40 cm | 90° | 100 cm | *N'est pas à la même hauteur que B2* |
| C2 | 40 cm | 90° | 20 cm | *N'est pas à la même hauteur que B2* |
| D1 | 80 cm | 270° | 60 cm | *Localisation par rapport au nord magnétique opposée par rapport à B2* |
| D2 | 80 cm | 270° | 60 cm | *Localisation par rapport au nord magnétique opposée par rapport à B2* |
| E2 | 150 cm | 270° | 60 cm | *Localisation par rapport au nord magnétique opposée par rapport à B2* |

On remarque que les informations reçues par le premier objet B2 ne sont pas suffisantes pour déterminer précisément la position des deuxièmes objets B1 et B3. Ainsi, si l'on considère uniquement les informations données par la hauteur par rapport au sol (60 cm), la localisation par rapport au nord magnétique (90°), et la distance par rapport à l'objet B2 (30 cm), il existe plusieurs positions candidates pour le deuxième objet B1, respectivement B3, localisées sur un cercle, comme illustré en figure 7. Si l'on suppose que les deuxièmes objets B1 et B3 sont sur une même étagère (puisqu'ils sont à la même hauteur par rapport au sol), ils sont vraisemblablement sur un même plan, face aux regards des utilisateurs circulant dans l'allée. Il reste donc deux positions candidates 71, 72 pour les objets B1 et B3. La détermination de la position d'un de ces deux objets (par exemple B3) permet donc de déduire la position de l'autre objet (par exemple B1).

Pour lever cette incertitude, qui n'existe que si l'on se concentre sur un seul objet (B2), il est possible de tenir compte d'informations en provenance d'au moins un troisième objet, qui est voisin d'un deuxième objet, i.e. voisin de B1 ou B3 (soit encore voisin indirect du premier objet B2).

On considère par exemple désormais que l'étiquette B3 623 est un premier objet.

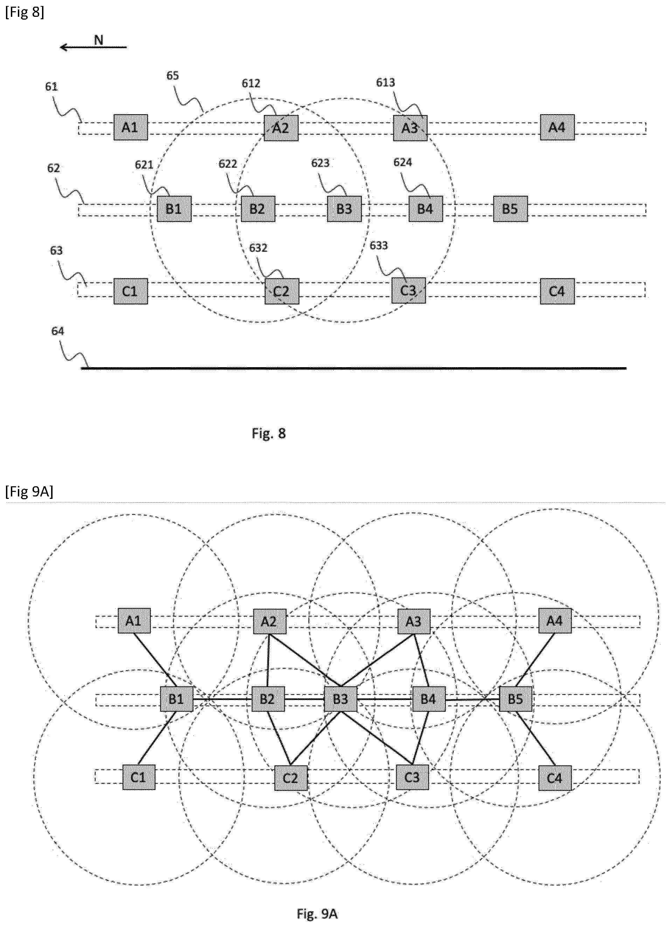

Comme illustré en figure 8, la zone de couverture du premier objet B3 correspond sensiblement à une sphère 81, de même diamètre que la sphère 65 si l'on considère de mêmes caractéristiques d'émission/réception pour l'objet B3 que pour l'objet B2. Ainsi, le premier objet B3 peut communiquer avec les deuxièmes objets B2 622, A2 612, A3 613, B4 624, C3 633 et C2 632 situés dans sa zone de couverture, considérés comme « visibles » du premier objet B3. Ces deuxièmes objets B2, A2, A3, B4, C3 et C2 sont les « voisins directs » du premier objet B3. Les objets A3, B4 et C3 sont des voisins indirects de l'objet B2 (également appelés troisièmes objets par rapport au premier objet B2).

| Identifiant Objet2 distant | Distance par rapport à Objet1 (B3) | Localisation par rapport au nord magnétique | Hauteur par rapport au sol | Autres informations (par exemple : direction de l'objet) |
|---|---|---|---|---|
| B2 | 30 cm | 90° | 60 cm | |
| B4 | 30 cm | 90° | 60 cm | |
| A2 | 50 cm | 90° | 100 cm | *N'est pas à la même hauteur que B3* |
| A3 | 50 cm | 90° | 100 cm | *N'est pas à la même hauteur que B2* |
| C2 | 50 cm | 90° | 20 cm | *N'est pas à la même hauteur que B3* |
| C3 | 50 cm | 90° | 20 cm | *N'est pas à la même hauteur que B2* |

On constate que l'objet B1 n'est pas dans la zone de couverture 81 du premier objet B3 (l'objet B1 est hors de visibilité du premier objet B3). L'objet B1 est un voisin indirect du premier objet B3 (également appelé troisième objet par rapport au premier objet B3).

L'échange de ces informations utiles au positionnement entre l'objet B2 et l'objet B3 (ainsi qu'éventuellement des informations utiles au positionnement en provenance des autres objets), et notamment le recoupement d'informations entre les différents objets, permet de connaitre la localisation de chaque objet les uns par rapport aux autres (au delta près de la précision de la technique utilisée pour connaitre la distance entre eux).

Par exemple, l'objet B2 peut mettre à jour son tableau à partir des informations reçues de l'objet B3 :

| Identifiant Objet2 distant | Distance par rapport à Objet1 (B2) | Localisation par rapport au nord magnétique | Hauteur par rapport au sol | Autres informations (par exemple : direction de l'objet) |
|---|---|---|---|---|
| B1 | 30 cm | 90° | 60 cm | B3 est positionné entre B2 et B4, donc B1 est à la droite de B2 (i.e. du côté opposé à B3 par rapport à B2) |
| B3 | 30 cm | 90° | 60 cm | B3 est positionné entre B2 et B4 |
| ... | | | | |

La figure 9A illustre ainsi la zone de couverture de chaque étiquette du rayonnage I, en vue de face, et les liens de communications entre les différents objets.

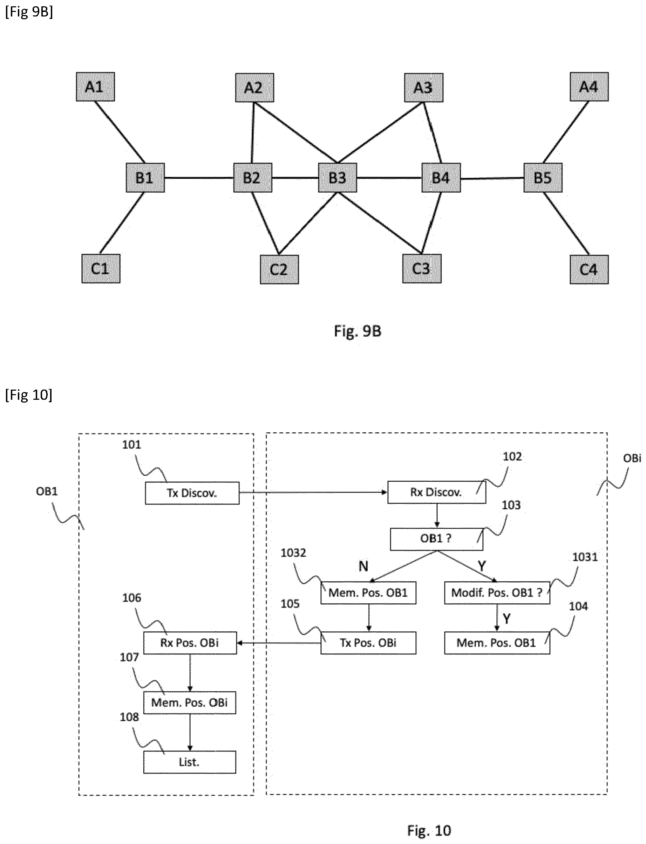

Comme illustré en figure 9B, il est ainsi possible de créer un ensemble de graphes de voisinage pour les différents objets, et de les assembler au fur et à mesure. Par exemple, on commence à construire le graphe de voisinage de B1, quand B1 est considéré comme un premier objet. On construit ensuite le graphe de voisinage de B2, quand B2 est considéré comme un premier objet. Comme indiqué ci-dessus, il reste une incertitude sur la position des objets B1 et B3. On construit alors le graphe de voisinage de B3, quand B3 est considéré comme un premier objet. La construction de ce graphe de voisinage permet de définir la position de B1. On procède ainsi de suite, jusqu'à la création du graphe complet représentant le positionnement de l'ensemble des objets du système de la figure 1 par exemple.

Les recoupements d'informations provenant des différents objets permettent ainsi de lever des doutes et/ou inconnues résiduelles quant au positionnement des objets les uns par rapport aux autres (certains objets ayant plusieurs positions candidates), pour arriver à une carte de positionnement sur les différentes étagères (ou autre) où un objet n'a plus qu'une seule position possible.

On note par ailleurs que le graphe obtenu permet de disposer d'une vue tridimensionnelle des connexions entre les objets. A titre illustratif, la figure 9B illustre une vue 2D des connexions entre les différentes étiquettes du rayon I.

Cette vision de l'infrastructure de connectivité entre objets du système peut être très utile en cas d'échanges de données entre les objets (par exemple pour effectuer une configuration ou une mise à jour d'au moins certains des objets).

Selon un mode de réalisation, il est ainsi possible d'effectuer une configuration ou mise à jour des objets à partir d'un seul point d'entrée (un seul objet), qui pourra se propager d'un objet à l'autre par P2P sur tout ou partie de l'infrastructure. Par exemple, une information communiquée à l'objet B1 peut se propager aux objets A1, C1, B2, puis de l'objet B2 aux objets A2, B3, C2, puis de l'objet B3 aux objets A3, B4 et C3, puis de l'objet B4 à l'objet B5, puis de l'objet B5 aux objets A4 et C4.

En particulier, une telle carte de positionnement des objets entre eux peut être mise à jour dynamiquement. Notamment, si un objet bouge (par exemple si une étiquette tombe), la position de cet objet est modifiée, et la carte de positionnement est mise à jour. En particulier, dans certains modes de réalisation, une alarme peut être déclenchée.

On présente ci-après un exemple d'algorithme pouvant être mis en œuvre par au moins un premier objet, et éventuellement par l'ensemble des objets, du système de la figure 1 par exemple, de façon périodique ou suite à un événement (par exemple en cas de détection d'un changement de position). L'algorithme ci-dessous peut notamment être mis en œuvre au cours de l'étape d'obtention 22 de la position relative d'au moins un deuxième objet par rapport au premier objet.

Au cours d'une première étape 101, le premier objet OBJ1 demande à ses voisins, i.e. à au moins un deuxième objet, de s'annoncer. Par exemple, le premier objet émet une requête multicast de découverte, ou tout autre requête selon le protocole de communication disponible dans le système. Au moins un voisin OBi recevant 102 la requête multicast de découverte vérifie 103 s'il connaît le premier objet OBJ1 (i.e. le premier objet est un voisin connu).

Si oui, le voisin OBi vérifie 1031 si la position et/ou au moins une information utile au positionnement reçue du premier objet OBJ1 a changé (par exemple la hauteur du premier objet OB1 par rapport au sol, ou son orientation par rapport au nord magnétique). Si la position et/ou au moins une information du premier objet OBJ1 a changé, le voisin OBi peut stocker 104 les nouvelles informations du premier objet OBJ1. Dans les deux cas (modification de la position/ information du premier objet OB1 ou non) le voisin OBi peut répondre au premier objet OB1 qu'il est toujours là et que rien n'a changé pour lui. Sinon, i.e. si le premier objet OB1 est inconnu (car c'est un nouveau voisin), le voisin OBi mémorise 1032 le position et/ou au moins une information utile au positionnement reçue du premier objet OBJ1 dans sa liste de nouveaux voisins. Le voisin OBi peut alors envoyer 105 au premier objet OBJ1 sa position ou au moins une information utile au positionnement appartenant au groupe comprenant sa localisation par rapport au nord magnétique, son orientation spatiale (tangage, roulis, lacet), sa hauteur par rapport à au moins un point de référence, sa distance avec le premier objet OBJ1 si elle est connue, d'autres informations complémentaires comme par exemple la liste de ses voisins déjà connu, etc.

A réception de la position ou au moins une information du voisin OBi, le premier objet OB1 mémorise 107 les informations retournées par le voisin OBi, et plus généralement par chaque voisin i répondant à la requête multicast de découverte, et construit 108 ainsi dynamiquement sa liste de plus proches voisins et/ou la carte de positionnement correspondante.

On note par ailleurs que si un voisin OBj ne répond plus ou a disparu depuis la dernière recherche de voisins (i.e. depuis la dernière requête multicast de découverte), le premier objet OB1 peut supprimer ce voisin OBj de sa liste des plus proches voisins.

De plus, si un objet est en mouvement, ou nouveau dans le système, il peut envoyer à tous les objets avec lesquels il peut communiquer (via tout type de protocole de communication) une information indiquant qu'il est en mouvement ou qu'il est nouveau dans le système. Par exemple, une telle information peut être transmise dans un message multicast. Cet objet peut également informer ses voisins qu'ils doivent se mettre à jour.

*5.4 Variantes*

On a décrit ci-dessus un mode de réalisation selon lequel les objets déterminent eux-mêmes leur position relative par rapport aux autres objets. Chaque objet peut ainsi déterminer sa position et déterminer localement un sous-ensemble de voisins possibles, voire échanger des informations avec les voisins directs. Chaque objet peut ainsi construire un sous-graphe tridimensionnel pour positionner dans l'espace l'ensemble des objets à proximité par rapport à lui.

En variante, les objets du système peuvent transmettre leur position ou au moins une information utile au positionnement à un serveur distant, par exemple une passerelle, qui se charge de déterminer les positions des différents objets entre eux.

Comme décrit ci-dessus, quel que soit le mode de réalisation, il est possible de construire une carte de positionnement des différents objets du système en rassemblant l'ensemble des informations utiles au positionnement provenant des différents objets. En d'autres termes, en prenant les informations collectées par chaque objet, ou directement chaque sous-graphe provenant de chaque objet, il est possible de réaliser une telle carte, ou graphe, qui agrège l'ensemble des informations, et positionne de façon précise dans l'espace l'ensemble des objets les uns par rapport aux autres, sans avoir besoin de balises ou ancres dont les coordonnées géographiques sont connues par avance. Une telle carte offre ainsi une vision tridimensionnelle de l'infrastructure dans l'espace.

Notamment, chaque objet dispose d'informations en provenance des objets voisins localisés à proximité de sa position, comprenant par exemple :

- un identifiant de l'objet voisin,
- une localisation de l'objet voisin par rapport au nord magnétique,
- une orientation spatiale de l'objet voisin,
- une distance avec l'objet voisin,
- une hauteur de l'objet voisin par rapport à au moins un point de référence,
- éventuellement d'autres informations qui amènent plus de précision.

En particulier, selon un mode de réalisation, si un objet est déplacé d'un endroit à un autre, l'objet lui-même est en capacité de recalculer sa position (notamment sa hauteur par rapport au sol, sa localisation par rapport au nord magnétique) et sa position relative par rapport aux autres objets voisins. Un nouveau sous-graphe peut ainsi être généré. Les objets voisins peuvent également mettre à jour leur-sous-graphe avec la nouvelle position de l'objet déplacé. Ainsi, seul un ensemble de sous-graphes peut être régénéré et il est possible de reconstruire rapidement la carte de positionnement globale.

*5.5 Exemples d'applications*

L'invention trouve notamment, mais non exclusivement des applications dans les domaines suivants :

- commerce, les objets pouvant être de type étagères de rangement, étiquettes de prix, ...,
- logistique, les objets pouvant être des étiquettes de suivi de colis permettant de savoir où sont rangés les colis les uns par rapport aux autres, ...,
- prévention du vol, les objets pouvant être des œuvres d'art d'une exposition, d'un musée, ..., des véhicules d'un garage, d'une fourrière, ..., que l'on cherche à localiser les uns par rapport aux autres pour pouvoir déclencher une alarme en cas d'anomalie (déplacement inopiné d'un objet par exemple), etc.,
- gestion de flotte, les objets pouvant être des drones que l'on cherche à localiser les uns par rapport aux autres, sans point connu au sol ou dans l'espace, par exemple en cas d'impossibilité de positionnement par satellite (GPS défaillant ou environnement contraint, par exemple intérieur d'un bâtiment, grottes, sous-sol, ...).

Plus généralement, l'invention s'applique à tout objet dont on souhaite connaitre la position dans l'espace, sans avoir de balises ou ancres dont les positions sont connues par avance.

A titre d'exemple, on se place à nouveau dans le domaine du commerce, et l'on considère que les objets sont de type étiquette de prix.

De telles étiquettes de prix peuvent être des étiquettes intelligentes, et porter des écrans permettant par exemple de faire défiler des publicités relatives aux produits auxquels elles sont dédiées. De telles étiquettes permettent d'attirer l'attention des clients sur certains produits, voire sur l'ensemble des produits d'un magasin.

Or la multiplication de ces étiquettes de prix est un problème lorsqu'il s'agit de les configurer manuellement une par une.

Avec la solution proposée, les étiquettes peuvent connaître leurs voisines (à gauche ou à droite sur une même étagère, au-dessus ou en-dessous dans un même rayonnage, sur un même rayonnage en dos-à-dos, sur des rayonnages distincts en vis-à-vis, etc) et communiquer au moins deux à deux. Cela permet pour chaque étiquette de se localiser par rapport à ses voisines, et de pouvoir communiquer plus efficacement avec les étiquettes en proximité directe si besoin.

Par exemple, en reprenant la figure 9B, on sait que les étiquettes B1-B2, B2-B3, B3-B4, B4-B5 peuvent communiquer deux à deux. Ainsi, si un utilisateur passe devant les étiquettes B1, B2, B3, B4, B5 dans cet ordre, il est possible d'identifier le cheminement de l'utilisateur dans l'allée et de faire défiler un message sur l'étiquette B1, puis sur l'étiquette B2 suite à la transmission du message de l'étiquette B1 vers l'étiquette B2, et ainsi de suite. Il est ainsi possible que le message porté par l'étiquette suive le trajet de l'utilisateur, par exemple pour l'informer d'une nouvelle offre promotionnelle.

*5.6 Dispositifs*

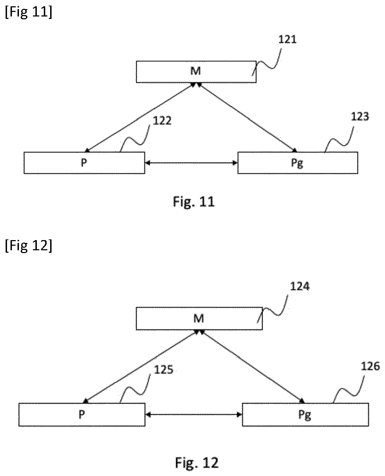

On présente finalement, en relation avec les figures 11 et 12, les structures simplifiées d'un objet et d'un serveur selon au moins un mode de réalisation de l'invention.

Comme illustré en figure 11, un objet selon un mode de réalisation de l'invention comprend une mémoire 121, une unité de traitement 122, équipée par exemple d'une machine de calcul programmable ou d'une machine de calcul dédiée, par exemple un processeur P, et pilotée par le programme d'ordinateur 123, mettant en œuvre des étapes du procédé de positionnement d'objets selon au moins un mode de réalisation de l'invention.

A l'initialisation, les instructions de code du programme d'ordinateur 123 sont par exemple chargées dans une mémoire RAM avant d'être exécutées par le processeur de l'unité de traitement 122.

Le processeur de l'unité de traitement 122 de l'objet met en œuvre des étapes du procédé de positionnement d'objets décrit précédemment, selon les instructions du programme d'ordinateur 123, pour :

- déterminer la position de ce premier objet (notamment sa localisation par rapport au nord magnétique et sa hauteur par rapport à au moins un point de référence),
- obtenir une position relative d'au moins un deuxième objet par rapport au premier objet. Comme illustré en figure 12, un serveur selon un mode de réalisation de l'invention comprend une mémoire 124, une unité de traitement 125, équipée par exemple d'une machine de calcul programmable ou d'une machine de calcul dédiée, par exemple un processeur P, et pilotée par le programme d'ordinateur 126, mettant en œuvre des étapes du procédé de positionnement d'objets selon au moins un mode de réalisation de l'invention.

A l'initialisation, les instructions de code du programme d'ordinateur 126 sont par exemple chargées dans une mémoire RAM avant d'être exécutées par le processeur de l'unité de traitement 125.

Le processeur de l'unité de traitement 125 du serveur met en œuvre des étapes du procédé de positionnement d'objets décrit précédemment, selon les instructions du programme d'ordinateur 125, pour :

- obtenir une position d'un premier objet,
- obtenir une position d'au moins un deuxième objet,
- déterminer la position relative dudit au moins un deuxième objet par rapport audit premier objet.

## Revendications

1. Procédé de positionnement d'objets, mis en œuvre dans un premier objet en communication avec au moins un deuxième objet, comprenant :

   - la détermination (21) d'une position dudit premier objet, mettant en œuvre :

     • la détermination (211) de la localisation dudit premier objet par rapport au nord magnétique,
     • la détermination (212) de la hauteur dudit premier objet par rapport à au moins un point de référence,

   - l'obtention (22) de la position relative dudit au moins un deuxième objet par rapport audit premier objet.

2. Procédé selon la revendication 1, **caractérisé en ce que** l'obtention (22) de la position relative dudit au moins un deuxième objet par rapport audit premier objet comprend l'obtention d'une distance entre ledit premier objet et ledit au moins un deuxième objet.

3. Procédé selon l'une quelconque des revendications 1 et 2, **caractérisé en ce que** l'obtention (22) de la position relative dudit au moins un deuxième objet par rapport audit premier objet comprend la détection d'un signal radio émis par ledit au moins un deuxième objet.

4. Procédé selon l'une quelconque des revendications 1 à 3, **caractérisé en ce qu'**il comprend la transmission, dudit premier objet vers ledit au moins un deuxième objet ou vers un serveur distant, d'au moins une première information utile au positionnement desdits objets.

5. Procédé selon l'une quelconque des revendications 1 à 4, **caractérisé en ce qu'**il comprend la réception, en provenance dudit au moins un deuxième objet ou d'un serveur distant, d'au moins une deuxième information utile au positionnement desdits objets.

6. Procédé selon l'une quelconque des revendications 1 à 5, **caractérisé en ce que** l'obtention (22) de la position relative d'un desdits au moins un deuxième objet par rapport audit premier objet met en œuvre une estimation de la position dudit deuxième objet par rapport audit premier objet, délivrant au moins deux positions candidates, une réception d'au moins une troisième information utile au positionnement desdits objets en provenance d'au moins un troisième objet, et relative à une communication dudit troisième objet avec ledit premier objet et/ou ledit deuxième objet, et une sélection d'une desdites positions candidates en tenant compte de ladite au moins une troisième information utile au positionnement desdits objets reçue dudit troisième objet.

7. Procédé selon l'une quelconque des revendications 4 à 6, **caractérisé en ce que** lesdites informations utiles au positionnement desdits objets en provenance dudit premier, respectivement deuxième, respectivement troisième objet, appartiennent au groupe comprenant :

- un identifiant dudit objet,
- une localisation dudit objet par rapport au nord magnétique,
- une orientation spatiale par rapport à un repère de référence dudit objet,
- une distance entre au moins deux desdits objets parmi le premier, le deuxième et le troisième objet,
- une hauteur dudit objet par rapport audit au moins un point de référence.

8. Procédé selon l'une quelconque des revendications 1 à 7, **caractérisé en ce qu'**il comprend le stockage d'au moins un élément appartenant au groupe comprenant :

- la position dudit premier objet selon la revendication 1,
- la position relative dudit au moins un deuxième objet par rapport audit premier objet selon la revendication 1,
- au moins une desdites informations utiles au positionnement desdits objets en provenance dudit premier, respectivement deuxième, respectivement troisième, objet selon la revendication 7.

9. Procédé selon l'une quelconque des revendications 1 à 8, **caractérisé en ce qu'**il comprend la construction d'une carte de positionnement desdits premier et au moins un deuxième objet.

10. Procédé selon l'une quelconque des revendications 1 à 9, **caractérisé en ce qu'**il comprend l'obtention, par le premier objet, d'informations de configuration ou de mise à jour dudit premier objet, et la transmission à un ensemble d'objets, de proche en proche, desdites informations de configuration ou de mise à jour.

11. Procédé selon l'une quelconque des revendications 1 à 10, **caractérisé en ce qu'**il comprend le déclenchement d'une alarme en cas de détection d'un changement de position dudit premier objet ou au moins un deuxième objet.

12. Procédé selon l'une quelconque des revendications 1 à 11, **caractérisé en ce que** ladite obtention (22) de la position relative dudit au moins un deuxième objet par rapport audit premier objet tient compte d'au moins une contrainte physique liée à l'endroit où sont positionnés lesdits objets.

13. Procédé de positionnement d'objets, mis en œuvre dans un serveur distant en communication avec un premier objet et au moins un deuxième objet, comprenant :

- l'obtention (31) d'une position dudit premier objet,
- l'obtention (32) d'une position dudit au moins un deuxième objet,
- la détermination (33) de la position relative dudit au moins un deuxième objet par rapport audit premier objet,

la position dudit premier, respectivement deuxième, objet comprenant :

- la localisation dudit premier, respectivement deuxième, objet par rapport au nord magnétique,
- la hauteur dudit premier, respectivement deuxième, objet par rapport à au moins un point de référence.

14. Objet, dit premier objet, en communication avec au moins un deuxième objet, comprenant :

- des moyens de détermination de sa position, comprenant :

  • des moyens de détermination de la localisation dudit premier objet par rapport au nord magnétique,
  • des moyens de détermination de la hauteur dudit premier objet par rapport à au moins un point de référence,

- des moyens d'obtention d'une position relative dudit au moins un deuxième objet par rapport audit premier objet.

15. Serveur en communication avec un premier objet et au moins un deuxième objet, comprenant :

- des moyens d'obtention d'une position dudit premier objet,
- des moyens d'obtention d'une position dudit au moins un deuxième objet,
- des moyens de détermination de la position relative dudit au moins un deuxième objet par rapport audit premier objet,

la position dudit premier, respectivement deuxième, objet comprenant :

- la localisation dudit premier, respectivement deuxième, objet par rapport au nord magnétique,
- la hauteur dudit premier, respectivement deuxième, objet par rapport à au moins un point de référence.

[Fig 1]

Fig. 1

[Fig 2]

Fig. 2

[Fig 3]

Fig. 3

[Fig 4A]

Fig. 4A

[Fig 4B]

Fig. 4B

[Fig 4C]

Fig. 4C

[Fig 5A]

Fig. 5A

[Fig 5B]

Fig. 5B

[Fig 5C]

Fig. 5C

[Fig 6A]

Fig. 6A

[Fig 6B]

Fig. 6B

[Fig 7]

Fig. 7

[Fig 8]

Fig. 8

[Fig 9A]

Fig. 9A

[Fig 9B]

Fig. 9B

[Fig 10]

Fig. 10

[Fig 11]

Fig. 11

[Fig 12]

Fig. 12

Europäisches
Patentamt

European
Patent Office

Office européen
des brevets

## RAPPORT DE RECHERCHE EUROPEENNE

Numéro de la demande

**EP 22 21 2858**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | US 2018/017660 A1 (ROQUEL ARNAUD [FR]) 18 janvier 2018 (2018-01-18) * alinéas [0026], [0027], [0029], [0030], [0035] * * alinéas [0062], [0064], [0065] – [0067] * * alinéas [0081], [0084], [0086] * ----- | 1-15 | INV. G01S5/02 G01C9/00 G01S5/18 G01S11/02 G01C21/00 |
| Y | EP 3 451 755 A1 (HUAWEI TECH CO LTD [CN]) 6 mars 2019 (2019-03-06) * alinéas [0031], [0055], [0061], [0070] * * alinéas [0107], [0108] * ----- | 1-15 | |
| A | US 2020/275241 A1 (LEVY GIL [IL] ET AL) 27 août 2020 (2020-08-27) * alinéas [0054] – [0058], [0089] * ----- | 1-3,9, 13-15 | |

DOMAINES TECHNIQUES RECHERCHES (IPC)

G01S
G01C

Le présent rapport a été établi pour toutes les revendications

| Lieu de la recherche | Date d'achèvement de la recherche | Examinateur |
|---|---|---|
| Munich | 26 avril 2023 | Naddeo, Giovanni |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

................................................................

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 22 21 2858

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-04-2023

| Document brevet cité au rapport de recherche | | Date de publication | Membre(s) de la famille de brevet(s) | | Date de publication |
|---|---|---|---|---|---|
| US 2018017660 | A1 | 18-01-2018 | AU | 2015356865 A1 | 20-07-2017 |
| | | | CA | 2969807 A1 | 09-06-2016 |
| | | | EP | 3227705 A1 | 11-10-2017 |
| | | | FR | 3030052 A1 | 17-06-2016 |
| | | | FR | 3030053 A1 | 17-06-2016 |
| | | | US | 2018017660 A1 | 18-01-2018 |
| | | | WO | 2016087794 A1 | 09-06-2016 |
| EP 3451755 | A1 | 06-03-2019 | CN | 108012324 A | 08-05-2018 |
| | | | EP | 3451755 A1 | 06-03-2019 |
| | | | EP | 3875982 A1 | 08-09-2021 |
| | | | US | 2019219397 A1 | 18-07-2019 |
| | | | WO | 2018076621 A1 | 03-05-2018 |
| US 2020275241 | A1 | 27-08-2020 | AUCUN | | |

EPO FORM P0460

Pour tout renseignement concernant cette annexe : voir Journal Officiel de l'Office européen des brevets, No.12/82